# EUROPEAN PATENT APPLICATION

(11) **EP 0 526 384 A2**
(43) Date of publication of application: **03.02.1993**
(21) Application number: 92610056.1
(22) Date of filing: 16.07.1992
(51) Int. Cl.: B60B 7/00, B60B 33/00

(54) **A running wheel structure for a trolley or a similar transport vehicle**

(30) Priority: 30.07.1991 DK 1412/91
(71) Applicant: COMPLASTEC ApS, DK-4690 Haslev (DK)
(72) Inventor: Loock, Wilfried, DK-4690 Haslev (DK)
(74) Representative: Raffnsöe, Knud Rosenstand

(57) **Abstract**

A running wheel structure for a trolley or a similar transport vehicle comprises a wheel support (2) with two fork arms designed to be mounted beneath the trolley or cart and between which a wheel (3) is mounted having on either side an annular indentation (14) between a peripheral rim portion (11) constituting externally the running surface (12) of the wheel and a central hub portion (10) with a continuous bore for the wheel shaft (4). On either side of the wheel the hub portion (10) is covered by a cap (7) designed as a comparatively narrow cupular shred catcher with a side wall (33) substantially equiform with and positioned at a short distance from the hub portion (10) and a bottom face (32) which is kept at a short distance from an end face (15) of the hub portion by a tube (17) inserted in the bore of the hub portion (10). The side wall (33) of the cap (30) terminates at a short distance from the bottom (13) of the indentation (14), thereby forming a comparatively narrow sluicing duct (34) between the cap (30) and the end and outer surfaces of the hub portion (10).

## Description

The invention relates to a running wheel structure for a trolley or a similar transport vehicle comprising a wheel support with two fork arms designed to be mounted beneath the trolley or cart and between which a wheel is mounted having on either side an annular indentation between a peripheral rim portion constituting externally the running surface of the wheel and a central hub portion with a continuous bore for the wheel shaft, the hub portion being covered by a cap on either side of the wheel.

In prior art wheel assemblies of this type the caps are designed as comparatively thin sheet plates, e.g. of metal, mounted on the wheel shaft and profiled so that it covers practically the entire wheel side from the shaft to the wheel rim and leaves only a small clearance between the outer edge of the cap and the inner surface of the wheel rim.

The two caps of the wheel are carried by the wheel shaft and abut on the respective end faces of the hub - or on the end edges of a metallic tube accommodated within the hub and acting as a slide bearingin such a manner that a comparatively large hollow space is left between the body portion and the actual cap.

When using a trolley or a similar cart for the transportation of for instance pieces of meat in a slaughterhouse some waste particles, such as meat remains or particles, fat, threads etc., collect in said hollow space and around the wheel hub and the wheel shaft.

The veterinary authorities demand inter alia such wheels to be frequently cleaned which is effected by hign-pressure water sluicing, possibly with the addition of appropriate chemicals for the removal of organic waste material (fat, blood etc.).

It has turned out in practice that a cap covering approximately the complete lateral surface of the wheel prevents the high-pressure sluicing water from reaching far in around the hub, inter alia because the narrow annular slit between the outer edge of the cap and the wheel rim entails that the high-pressure sluicing cannot obtain the correct direction in order to reach the hub and that the water pressure behind the cap radpidly decreases.

The invention aims at eliminating said difficulties and for that purpose the running wheel structure of the above mentioned type is according to the invention characterized in that the cap is designed as a comparatively narrow, cupular shred catcher with a side wall, is substantially uniform with and positioned at a short distance from an outer surface of the hub portion and a bottom face which is kept at a distance from an end face of the hub portion by a tube inserted in the bore of the hub portion, the side wall of the cap terminating at a short distance from the bottom of said indentation, thereby forming a comparatively narrow sluicing duct between the cap and the end and outer surfaces of the hub portion.

With a protective bowl so designed which exposes most of the wheel surfaces and which terminates at a short distance from the bottom of the annular indentation in the wheel side, it has turned out to be possible by high-pressure sluicing to obtain a degree of purity complying with the demands of the veterinary authorities. It is ascertained after the cleaning that various waste products, such as fibres, textile remains, threads etc., which have collected between the cap and the hub portion have been completely removed. The improved cleaning effect is due to the fact that the high-pressure sluicing with the narrow sluicing duct in the clearance between the cap and the hub in the form outlined is easier to carry out at different angles and at a considerably smaller pressure loss.

The invention will now be explained in detail in the following with reference to the schematical drawings, in which
Fig. 1 is a side elevation of a running wheel with associated wheel support in a conventional design,
Fig. 2 - partially in section - a wheel as illustrated in Fig. 1 with associated cap but without wheel shaft and wheel support, and
Fig. 3 - partially in section - a view of an embodiment of the running wheel assembly according to the invention corresponding to Fig, 2, likewise without wheel shaft and wheel support but with a protective bowl in accordance with the invention.

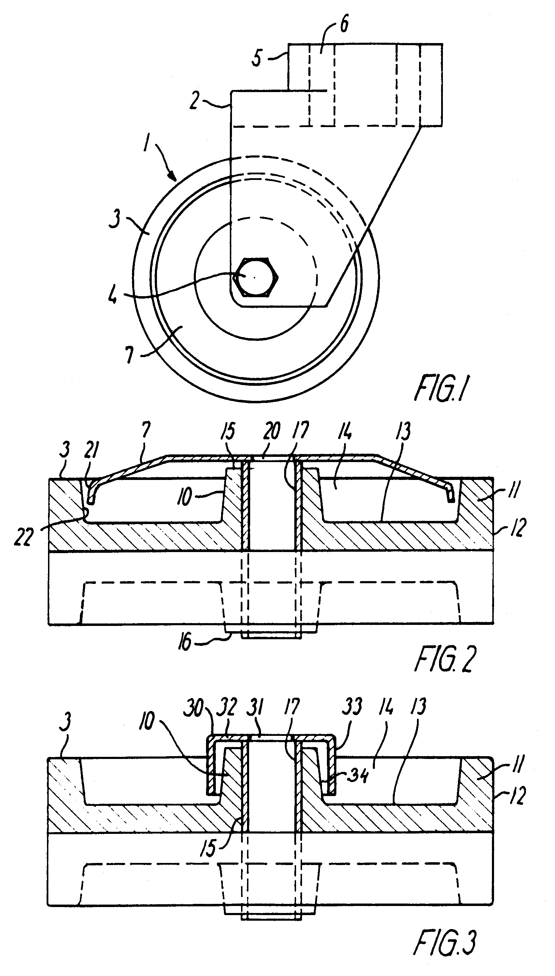

Fig. 1 shows a running wheel of a conventional type for a trolley or a similar cart for goods transportation. A wheel support 2 is provided with two arms between which the wheel 3 is rotatably mounted on a shaft, e.g. a bolt 4. In the upper, preferably cylindrical part 5 of the wheel support 2 a bearing 6, e.g. a ball bearing is inserted which in a manner known per se is designed for rotatable engagement with a pivot pin, not shown in the drawings, on the underside of the trolley or transport cart, likewise not shown.

Reference numeral 7 shows one of two caps which in a manner known per se are mounted on the wheel shaft 4 inside the two arms of the wheel support and are determined to cover and protect the two sides of the wheel 3.

The more detailed design of the wheel 3 proper appears from Fig. 2. The wheel 3, made from e.g. metal or plastic, has a hub portion 10, a rim portion 11 externally constituting the running surface 12 of the wheel and an interposed, depressed body portion 13 which between the hub portion 10 and the rim portion 11 forms an annular indentation 14. The structure is symmetrical in relation to the symmetrical plane of the wheel perpendicular to the wheel shaft.

The hub portion 10 is designed so that the distance between its two end faces 15, 16 is a little larger than the width of the running surface 12 of the wheel. In a central and axial hole in the hub portion 10 a metallic tube 17, e.g. a brass tube, is inserted, having a length a little larger than the above mentioned distance between the end faces 15, 16 of the hub.

The cap consists of a cupular plate, e.g. of aluminium, with a central hole 20 with a smaller diameter than the internal diameter of the metallic tube 17 so that the cap abuts on the end edge of the metallic tube.

The extreme edge 21 of the cupular cap 7 is bent axially inwards and extends into the annular indentation 14 until a short distance from the inner surface 22 of the rim portion 11 of the wheel while the cap 7 in an appropriate place between its central hole 20 and its outer edge 21 is bent axially inwards. Fig. 2 only shows one cap 7, but it is obvious that the wheel has two such caps, one on either side.

Fig. 3 to which the same reference numerals apply as in Fig. 2, shows the wheel structure according to the invention. On the wheel shaft, not shown, and likewise resting on the end edge of the metallic tube 17 there is mounted a cap in the form of a cupular shred catcher 30, e.g. of plastic. The shred catcher 30 has a central hole 31 with a diameter a little smaller than the internal diameter of the metallic tube 17. The bottom 32 of the shred catcher 30 has an internal diameter a little larger than the diameter of the hub portion 10 and its side wall 33 is substantially equiform with and positioned at a comparatively short distance from the outer surface of the hub 10, the free end edge being positioned at a comparatively short distance from the bottom of the annular indentation 14.

Fig. 3 only shows one such shred catcher but it is obvious that the wheel has two shred catchers, one on either side.

By the design illustrated in Fig. 3 a comparatively narrow sluicing duct 34 is provided between the hub portion 10 and the shred catcher 30, said sluicing duct communicating with the surrounding larger part of the annular indentation through a likewise comparatively narrow mouth 35 between the end edge of the shred catcher and the bottom of the indentation 14 formed by the body portion 13. As a consequence, a water-jet directed towards the indentation 14 by high-pressure sluicing will cause effective cleaning without any noticeable pressure loss of the interspace between the hub portion 10 and the shred catcher 30 for collected residual material.

## Claims

1. A running wheel assembly for a trolley or a similar transport vehicle comprising a wheel support (2) with two fork arms designed to be mounted beneath the trolley or cart and between which a wheel (3) is mounted having on either side an annular indentation (14) between a peripheral rim portion (11) constituting externally the running surface (12) of the wheel and a central hub portion (10) with a continuous bore for the wheel shaft (4) the hub portion (10) being covered by a cap (7) on either side of the wheel, characterized in that the cap (30) is designed as a comparatively narrow, cupular shred catcher (30) with a side wall (33) is substantially equiform with and positioned at a short distance from an outer surface of the hub portion (10) and a bottom face (32) which is kept at a distance from an end face of the hub portion (10) by a tube (17) inserted in the bore of the hub portion (10), the side wall (33) of the cap (30) terminating at a short distance from the bottom (13) of said indentation, thereby forming a comparatively narrow sluicing duct (34) between the cap (30) and the end and outer surfaces of the hub portion (10).
